# EUROPÄISCHE PATENTSCHRIFT

(11) **EP 1 710 125 B1**
(45) Veröffentlichungstag und Bekanntmachung des Hinweises auf die Patenterteilung: **23.01.2008**
(21) Anmeldenummer: 06004798.2
(22) Anmeldetag: 09.03.2006
(51) Int. Cl.: B60R 11/02, B60R 16/02

(54) **Modulare selbstkonfigurierende Dachhimmeluntergruppe**
Modular and self configuring roofliner components
Composants de plafond modulaire a auto configuration

(30) Priorität: 06.04.2005 DE 102005015750
(43) Veröffentlichungstag der Anmeldung: 11.10.2006
(73) Patentinhaber: AUDI AG, 85045 Ingolstadt (DE)
(72) Erfinder: Berlitz, Stephan, 86529 Schrobenhausen (DE); Knollmann, Nils, 85049 Ingolstadt (DE); Schmitz, Christoph, 93326 Abensberg (DE)
(74) Vertreter: Thielmann, Frank

(56) Entgegenhaltungen:
- EP-A- 1 087 464
- WO-A-03/093061
- DE-A1-8102004 056 26

## Beschreibung

Die Erfindung betrifft eine Dachhimmeluntergruppe für einen Kraftfahrzeugdachhimmel, umfassend einen Grundkörper mit wenigstens einem oder mehreren Steckplätzen für jeweils ein Bedien- oder Funktionsmodul, einer der Leistungsversorgung eines Bedien- oder Funktionsmoduls dienende und zu dem oder jedem Steckplatz geführte Verkabelung, sowie ein oder mehrere Bedien- oder Funktionsmodule.

Es ist zu einem Trend geworden, immer mehr Steuer-, Bedien- und Funktionselemente im Dachhimmel von Kraftfahrzeugen zu verbauen. Zunächst wurden diese Komponenten in für spezielle Kraftfahrzeugmodelle entwickelten Dachhimmeln fest verbaut. Neuere Dachhimmel bieten meist einen modularen Aufbau. Dadurch kann der Dachhimmel besser auf die individuellen Bedürfnisse des Benutzers angepasst werden.

Dennoch haben die herkömmlichen Dachhimmel und ihre Module einige Nachteile. Eine Vielzahl von verschiedenen Modulen, deren Größe nicht immer übereinstimmt, kommen infrage. Diese haben meist verschiedene Schnittstellen und müssen getrennt konfiguriert werden. Dies führt auch zu einer unüberschaubaren und aufwändigen Verkabelung.

Aus WO 03/093061 A ist eine Dachhimmeluntergruppe in Form eines Abdeckmoduls bekannt, das mehrere an ihm angeordnete Funktionselemente aufweist. Am Abdeckmodul ist zumindest ein Kontaktierungselement, beispielsweise eine Steckerleiste vorhanden, das der Kontaktierung der einzelnen, an verschiedenen Positionen an dem Abdeckmodul angeordneten Funktionselemente dient. Ist das Abdeckmodul mit allen Funktionselementen versehen, also fertig vormontiert, so wird es fahrzeugseitig im Dachhimmelbereich eingesetzt, wobei das Kontaktierungselement über eine "plug-and-play"-Fügebewegung beim Einsetzen entsprechend kontaktiert wird.

EP 1 087 464 A2 beschreibt eine Antenneneinheit, die in einer geeigneten, am Fahrzeugkörper vorgesehenen Ausnehmung im Dachbereich eingesetzt wird. An einer Trägerplatine sind verschiedene unterschiedliche Antennenmodule lösbar ansteckbar.

Schließlich beschreibt DE 10 2004 056 268 A1 ein Informationsanzeige- und Kommunikationssystem eines Fahrzeugs, welches eine Antennenanordnung aufweist.

Der Erfindung liegt daher die Aufgabe zugrunde, einen modularen Dachhimmel anzugeben, der den Einbau und den Austausch von Modulen und die Verkabelung im Dachhimmel vereinfacht.

Zur Lösung dieser Aufgabe ist bei einer Dachhimmeluntergruppe der eingangs genannten Art vorgesehen, dass ein Bedien- oder Funktionsmodul Anschlussmittel aufweist, die beim Einsetzen automatisch mit einem entsprechenden steckplatzseitigem Anschlussmittel der Verkabelung verbindbar sind, dass alle vorhandenen Steckplätze gleich dimensioniert sind und die gleiche Schnittstelle aufweisen, wobei jedes Bedien- oder Funktionsmodul entweder im Wesentlichen die Größe eines Steckplatzes aufweist oder so dimensioniert ist, dass es in eine Vielzahl von in einer Richtung, insbesondere in Fahrzeuglängsrichtung, mit festem Abstand fluchtend aneinander angrenzenden Steckplätzen einsetzbar und im Wesentlichen eine Vielzahl so groß wie ein Steckplatz ist, und dass zu jedem Steckplatz eine Kommunikationsbusleitung, über die ein Bedien- oder Funktionsmodul mit einem busseitig gekoppeltem Steuergerät kommuniziert, geführt ist und ein Bedien- oder Funktionsmodul eine Schnittstelle aufweist, die beim Einsetzen automatisch mit einer entsprechenden Schnittstelle der Kommunikationsbusleitung verbindbar ist, und/oder dass wenigstens eine Funkeinrichtung zur drahtlosen Kommunikation eines Bedien- oder Funktionsmoduls mit einem zugeordneten Steuergerät vorgesehen ist.

Dadurch reduziert sich der Aufwand zur Installation eines neuen Moduls darauf, es einfach in den entsprechenden Steckplatz einzustecken. Somit ist sogar ein Ein- oder Ausbau von Modulen durch den Endbenutzer denkbar, da keine neue Verkabelung angelegt werden muss. Module, die über eine Funkeinrichtung mit dem Steuergerät kommunizieren, benötigen entsprechend weniger Verkabelung.

Der Grundkörper umfasst wenigstens zwei gleich dimensionierte Steckplätze mit jeweils der gleichen Schnittstelle. Weiterhin sind alle vorhandenen Steckplätze gleich dimensioniert, besitzen also die gleichen Abmessungen und die gleichen Schnittstellen. Dementsprechend sind auch die Module auf diese Dimensionierung hin ausgelegt, sie sind folglich gleich groß. Vorteilhafterweise kann ein Modul in einen beliebigen Steckplatz eingesetzt werden, oder ein Steckplatz kann für jedes Modul verwendet werden. Ein Bedien- oder Funktionsmodul weist dabei im Wesentlichen die Dimensionen wenigstens eines Steckplatzes auf, wobei die Ausführungsform mit Modulen der Größe mehrerer Steckplätze unten weiter erläutert wird. Insbesondere können die Module beispielsweise alle im Wesentlichen die Abmessungen eines Steckplatzes aufweisen. Die Module verschwinden also entweder randbündig genau in den Steckplätzen oder es kann eine kleine, überstehende Blende vorgesehen sein. In beiden Fällen wird ein angenehmer optischer Eindruck eines in sich geschlossenen Dachhimmels erreicht. Insbesondere kann die Blende dabei einen Anschlag bilden. Die Abmessungen Länge x Höhe x Breite des Modulabschnitts, der in den Steckplatz einzuführen ist, sind also auf die Abmessungen des randseitig begrenzten Steckplatzes abgestimmt. Damit ist eine Standardisierung der Steckplätze und der Module bzw. der einzusteckenden Modulabschnitte erreicht, wodurch eine größtmögliche Flexibilität in Ausstattung und Gestaltung erzielt wird. Die Einbaureihenfolge der Module kann auf die speziellen Wünsche des Fahrers angepasst werden.

Durch eine entsprechende regelmäßige geometrische Anordnung der Steckplätze kann zudem erreicht werden, dass größere Module unter Verwendung mehrerer Steckplätze eingesetzt werden können. Dabei grenzen die Steckplätze dann beispielsweise fluchtend mit festem, vorzugsweise geringem Abstand in einer Richtung, insbesondere in Fahrzeuglängsrichtung, aneinander an. Ein im Wesentlichen zwei mal so großes Modul kann dann in zwei nebeneinander angeordnete Steckplätze eingesetzt werden. Sind mehr Steckplätze vorhanden, beispielsweise n Stück, so kann ein Modul auch im Wesentlichen bis zu n mal so groß wie ein Steckplatz sein und entsprechend viele Steckplätze übergreifen. So ist es möglich, auch Module anderer Größe zu realisieren und in den modularen Dachhimmel einzubauen. Festzuhalten ist dabei allerdings, dass die Module im Wesentlichen die Größe eines Steckplatzes oder ein Vielfaches dieser Größe haben sollten. Durch die bestimmten, für jeden Steckplatz gleichen Schnittstellen in Verbindung mit der gleichen Steckplatzgröße und ihrer Anordnung sowie den entweder steckplatzgroßen oder n mal so großen Modulen ist eine Standardisierung erreicht, die große Flexibilität und Gestaltungsfreiheit im Rahmen einer Norm gestattet. Dabei ist es nicht notwendig, dass ein Bedien- oder Funktionsmodul zum Einsetzen in n Steckplätze dann auch n Schnittstellen aufweist. Vorteilhafterweise ist dann nur eine aktive Schnittstelle erforderlich, die anderen Schnittstellen der Steckplätze können beispielsweise modulseitig durch blinde Schnittstellen abgedeckt werden. In einer Ausführungsform können die wenigstens zwei Steckplätze zweckmäßigerweise hintereinander in Fahrzeuglängsrichtung angeordnet sein

Obwohl die Fahrzeuglängsrichtung den größten Raum zur Anordnung mehrerer Steckplätze hintereinander bietet, ist es doch denkbar, dass Steckplätze auch in anderen Richtungen, beispielsweise der Fahrzeugquerrichtung, fluchtend hintereinander angeordnet sind. Auch könnte beispielsweise vorgesehen sein, dass zwei Reihen von in Fahrzeuglängsrichtung fluchtend mit festem Abstand angeordneten Steckplätzen nebeneinander in Fahrzeugquerrichtung vorhanden sind. Dies eröffnet dann die Möglichkeit, Module zu schaffen, die im Wesentlichen viermal so groß bzw. allgemein zwei n mal so groß wie ein Steckplatz sind und in beide Reihen über n-Steckplätze in Fahrzeuglängsrichtung eingesetzt werden könnten.

In weiterer vorteilhafter Ausgestaltung kann an jedem der Steckplätze eine Aufnahmevorrichtung angebracht sein, die ein eingesetztes Bedien- oder Funktionsmodul in dem Steckplatz arretiert und ein zugehöriges Mittel umfasst, durch welches die Arretierung selektiv lösbar ist. Damit wird nicht nur ein versehentliches Herausfallen von Modulen verhindert, sondern auch eine einfache Möglichkeit zum Aus- und Einbau von Modulen gegeben.

Vorteilhafterweise entsprechen die Kommunikationsbusleitung und die Schnittstellen dem LIN-Standard. Der LIN (Local Interconnected Netzwork)-Standard ist ein allgemeiner Standard, der für den Einsatz in einer Umgebung mit Modulen verschiedener Eigenschaften ideal geeignet ist.

In weiterer vorteilhafter Ausgestaltung kann der Grundkörper zusätzlich einen Transceiver und einen Mikrocontroller enthalten, die durch die Kommunikationsbusleitung mit der oder allen Schnittstellen derart verbunden sind, dass der Mikrocontroller automatisch den gesamten Datenverkehr von und zu dem einen oder den mehreren Bedien- oder Funktionsmodulen regelt. In dieser Variante benötigen die einzelnen Module keinerlei eigene Elektronik für den Datenaustausch. Damit wird vor allem die Fertigung der Module günstiger. Außerdem kann auch die Funkeinrichtung im Grundkörper enthalten sein und automatisch den gesamten Datenverkehr von und zu einem oder mehreren Bedien- oder Funktionsmodulen zum Steuergerät regeln, wobei die Verbindungsleitungen die Funkeinrichtung und das eine oder die mehreren Bedien- oder Funktionsmodule verbinden. Die Module können hierbei direkt mit der Funkeinrichtung kommunizieren oder über den Mikrocontroller, falls vorhanden. Der Verkabelungsabschnitt von der Funkeinrichtung zum Steuergerät entfällt somit vorteilhafterweise ganz.

In einer anderen Variante kann ein Bedien- oder Funktionsmodul einen Transceiver und einen Mikrocontroller umfassen. Umfassen alle Module den Transceiver und den Mikrocontroller, so ist ein weiterer Mikrocontroller oder Transceiver im Grundkörper nicht mehr notwendig. Sollten jedoch gegebenenfalls ein Mikrocontroller und ein Transceiver auch im Grundkörper enthalten sein, so kann die Berechtigung der einzelnen Mikrocontroller dadurch geregelt werden, dass der Mikrocontroller im Grundkörper einen Masterstatus erhält, der Mikrocontroller im Modul einen Slavestatus. Damit sind die Module mit eigenem Mikrocontroller und eigenem Transceiver sowohl mit einem Grundkörper mit einem Mikrocontroller als auch mit einem Grundkörper ohne eigenem Mikrocontroller verwendbar.

Von besonderem Vorteil ist es, wenn ein Bedien- oder Funktionsmodul jeweils eine Funkeinrichtung umfasst. Besitzen alle Module eine Funkeinrichtung, so ist nur noch die Verkabelung zur Leistungsübertragung an die einzelnen Module notwendig.

Die Dachhimmeluntergruppe kann auch zusätzlich wenigstens ein Abdeckelement für ungenutzte Steckplätze umfassen. Dann bietet die Dachhimmeluntergruppe sowohl Sicherheit als auch einen angenehmen Anblick.

Auch kann im Grundkörper ein fest eingebautes Innenlichtmodul oder ein fest eingebautes Betätigungs- und Anzeigemodul zusätzlich vorgesehen sein. Dies ist insbesondere dann sinnvoll, wenn die entsprechende Funktionalität serienmäßig in einem Modell enthalten ist. Ein solches fest eingebautes Betätigungs- und Anzeigemodul könnte eine Schiebe-/Ausstelldach-Schaltereinheit oder eine Mikrofoneinheit für eine Freisprecheinrichtung sein.

Das eine oder die mehreren Bedien- und Funktionsmodule können eine Mikrofoneinheit für eine Freisprecheinrichtung und/oder eine Leselichteinheit und/oder eine Garagenkontrolleinheit und/oder eine Schiebe-/Ausstelldach-Schaltereinheit und/oder einen Großdachbedienschalter und/oder eine Sprachbedienungseinheit und/oder eine Innenraumüberwachungseinheit und/oder ein aufklappbares Brillenfach umfassen. Natürlich sind weitere Funktionalitäten für den Fachmann denkbar.

Vorteilhafterweise kann die wenigstens eine Funkeinrichtung als eine Bluetooth-Einrichtung ausgebildet sein. Bluetooth ist eine sowohl sichere als auch etablierte Funknorm, die speziell für die Steuerung von Kleingeräten entwickelt wurde.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1a - d: eine Prinzipskizze einer erfindungsgemäßen Dachhimmeluntergruppe nach einem ersten Ausführungsbeispiel der vorliegenden Erfindung,
- Fig. 2: eine Prinzipskizze des Grundkörpers des zweiten Ausführungsbeispiels der vorliegenden Erfindung,
- Fig. 3: eine Prinzipskizze einer erfindungsgemäßen Dachhimmeluntergruppe nach einem dritten Ausführungsbeispiel, und
- Fig. 4: eine Prinzipskizze einer erfindungsgemäßen Dachhimmeluntergruppe nach dem vierten Ausführungsbeispiel der vorliegenden Erfindung.

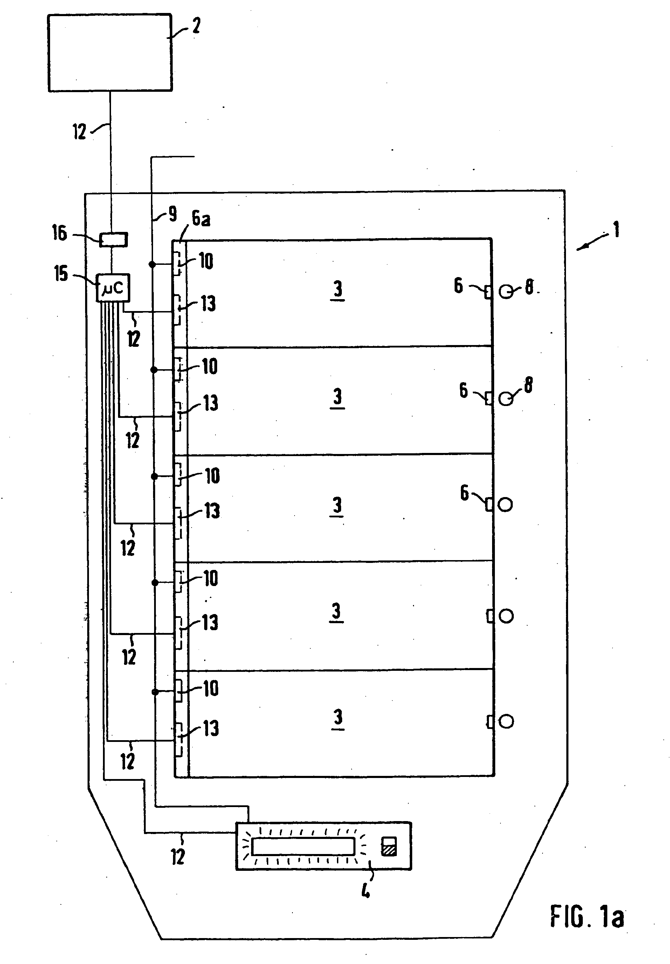

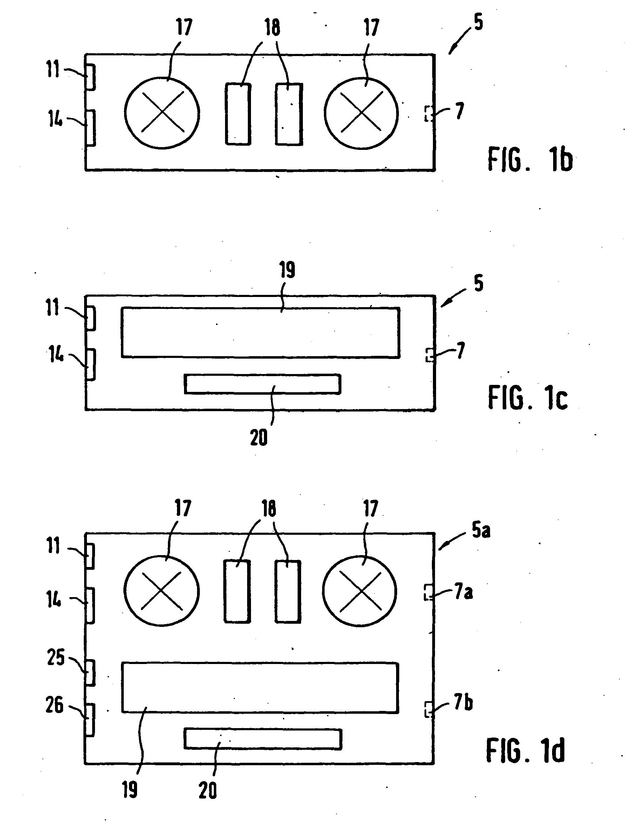

Fig. 1a - 1d zeigen den Grundkörper 1, die Steuereinheit 2 und die Bedien- und Funktionsmodule 5, 5a eines ersten Ausführungsbeispiels der vorliegenden Erfindung. Im Grundkörper 1 sind mehrere Steckplätze 3 vorgesehen. Alle Steckplätze 3 sind gleich dimensioniert und weisen die selbe Schnittstelle auf. Ferner sind die Steckplätze 3 mit festem Abstand fluchtend in Fahrzeuglängsrichtung hintereinander angeordnet. Außerdem ist ein fest installiertes Innenlichtmodul 4 am Grundkörper 1 angebracht. In die Steckplätze 3 können beispielsweise Bedien- oder Funktionsmodule 5 eingesetzt werden. Die Bedien- oder Funktionsmodule 5, die in die Steckplätze 3 eingefügt werden können, sind entweder im Wesentlichen so groß wie ein Steckplatz 3 dimensioniert, das bedeutet, die Abmessungen, Länge, Breite und Höhe, des Modulabschnitts, der in den Steckplatz 3 einzuführen ist, ist mit den Abmessungen des Steckplatzes 3 abgestimmt, so dass ein solches Bedien- oder Funktionsmodul 5, vgl. beispielsweise Fig. 1 bund 1 c, in jeden der Steckplätze 3 einsetzbar ist. Zudem kann ein Bedien- und Funktionsmodul 5 auch so ausgestaltet sein, dass es in n aufeinander folgende Steckplätze 3 einsetzbar ist, und dementsprechend im Wesentlichen n mal so groß wie ein Steckplatz 3 sein. Die Unterseite eines solchen Moduls, beispielsweise das Modul 5a in Fig. 1d, weist dann entsprechende Aussparung auf, um den festen Abstand zwischen den Steckplätzen zu überbrücken.

Die Bedien- und Funktionsmodule 5 sind so ausgestaltet, dass ein möglichst glatter, kantenfreier und das Aussehen der Dachhimmelgruppe optimierender Übergang zum Grundkörper 1 oder anderen Modulen 5 gegeben ist. Im Idealfall bemerkt der Betrachter kaum, dass es sich um eingesetzte Module 5 handelt und nimmt die Dachhimmeluntergruppe als in sich geschlossenes Objekt wahr. Dies kann dadurch erreicht werden, dass die Module 5 randbündig im Steckplatz 3 eingesetzt werden oder einen geringen, eine Blende bildenden Überstand über die Kante der Steckplätze 3 aufweisen.

Nicht benutzte Steckplätze 3 können mit einer nicht dargestellten Abdeckplatte verschlossen werden. An der Berandung der Steckplätze 3 sind Vorsprünge 6 ausgebildet, die in die Berandung einziehbar sind. An der gegenüberliegenden Seite ist ein gleichförmiger Überhang 6a der fahrzeuginnenseitigen Oberfläche des Grundkörpers 1 über den Steckplatz 3 vorgesehen. Wird ein Modul 5 in den Steckplatz 3 eingeführt, so dass es zunächst auf der Überhangsseite hineingeschoben wird und dann auf der gegenüberliegenden Seite angedrückt wird, so gibt der elastische Vorsprung 6 aufgrund der einwirkenden elastischen Kraft nach, um bei Erreichen der richtigen Einsetztiefe des Moduls 5 in eine an dem Modul 5 eingelassene Nut 7 einzuschnappen.

Dadurch wird das Modul 5 fest im Steckplatz 3 gehalten und kann nicht herausfallen. Der Vorsprung 6 kann über einen Druckknopf 8 zur Entnahme des Moduls eingezogen werden.

Zur Versorgung der Module 5 mit elektrischem Strom ist eine Verkabelung 9 zu jedem der Steckplätze 3 geführt, wo ein Anschlussmittel 10, das für jeden Steckplatz 3 gleich ausgebildet ist, vorgesehen ist. Idealerweise ist das Anschlussmittel 10 unter dem Überhang 6a angebracht. Bei ordnungsgemäßem Einsetzen des Moduls 5 wird nun automatisch das Anschlussmittel 10 mit einem entsprechenden modulseitigen Anschlussmittel 11 verbunden. Die Anschlussmittel 10 sind als eine Steckverbindung ausgebildet. Auch das fest installierte Innenlichtmodul 4 ist mit der Verkabelung 9 verbunden. Die Anschlussmittel sind z. B. als einfache Stecker ausgeführt.

Weiterhin sind im Grundkörper 1 Kommunikationsbusleitungen 12 zu jedem Steckplatz 3 und dem fest installierten Innenlichtmodul 4 geführt. Dort weisen sie eine für jeden Steckplatz 3 identische Schnittstelle 13 auf. Bei Einbau eines der Module 5 wird diese Schnittstelle 13, die sich vorzugsweise unterhalb des Überhangs 6a befindet, automatisch mit einer entsprechenden Schnittstelle 14 des Moduls 5 verbunden. Diese zu steckenden Schnittstellen 13 und 14 sowie die Kommunikationsbusleitungen 12 können beispielsweise den LIN-Standard erfüllen. Auch andere Busspezifikationen sind jedoch möglich. Die zu den Steckplätzen 3 und dem Innenlichtmodul 4 geführten Kommunikationsbusleitungen 12 sind mit einem Mikrocontroller 15 verbunden, der den Datenverkehr von und zu den Modulen 5 regelt. Über einen Transceiver 16 werden die Daten durch eine weitere Kommunikationsbusleitung an die Steuereinheit 2 übertragen oder empfangen.

Die in Fig. 1b und 1c dargestellten Module 5, in Fig. 1b ein Leselichtmodul mit Leselampen 17 und entsprechenden Schaltern 18, die die Leselampen an- oder ausschalten, sowie das zusätzliche in Fig. 1c dargestellte Innenraumlichtmodul mit Leuchtmittel 19 und entsprechendem Schalter 20, der das Leuchtmittel 19 an- oder ausschaltet, sind nur Beispiele für eine Vielzahl von verwendbaren Modulen. Denkbar sind auch eine Mikrofoneinheit für eine Freisprecheinrichtung, eine Garagentorkontrolleinheit, eine Schiebe-/Ausstelldach-Schaltereinheit, ein Großdachbedienschalter, eine Sprachbedienungseinheit, eine Innenraumüberwachungseinheit, ein aufklappbares Brillenfach und weitere Funktionalitäten. Die Verbindung der Module mit den Schnittstellen bzw. Anschlussmitteln geschieht automatisch beim Einbau, der Mikrocontroller 15 übernimmt automatisch und selbständig ihre Konfiguration und Anmeldung bei der Steuereinheit. Alternativ kann eine solche Funktionalität auch direkt in der Steuereinheit 2 beinhaltet sein.

In Fig. 1d ist ein Modul 5a dargestellt, das doppelt so groß wie die Module 5 ausgebildet ist. Es enthält nur ein Anschlussmittel 11 und nur eine Schnittstelle 14, jedoch zwei Nuten 7a und 7b und Aussparungen 25 und 26, so dass es in zwei aufeinander folgende Steckplätze 3 eingesetzt werden kann. Zu Verdeutlichungszwecken handelt es sich hier um eine Kombination der Innenbeleuchtungs- und Leselichtmodule 5.

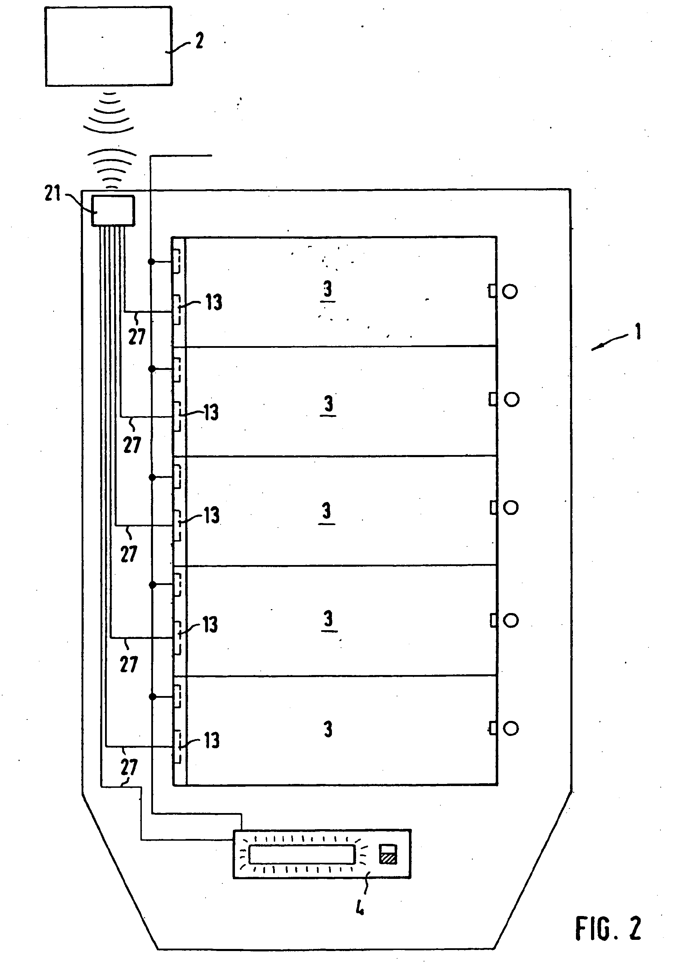

Fig. 2 zeigt den Grundkörper 1 und die Steuereinheit 2 eines zweiten Ausführungsbeispiels der vorliegenden Erfindung. Das Layout der Steckplätze 3 sowie ihre Aufnahmevorrichtung und die Leistungsversorgung sind wie im ersten Ausführungsbeispiel beschrieben ausgebildet, ebenso das fest installierte Innenlichtmodul 4. Zu den Steckplätzen 3 sind hier Verbindungsleitungen 27 geführt, die eine steckplatzseitige Schnittstelle 13 aufweisen. Statt des Mikrocontrollers 15 und des Transceivers 16 ist hier jedoch eine Funkeinrichtung 21 vorgesehen, die den Datenaustausch mit der Steuereinrichtung 2 regelt. Als Funkprotokoll wird hier Bluetooth verwendet, es ist jedoch auch jedes andere Protokoll denkbar. Eine weitere Verbindungsleitung zur Steuereinrichtung 2 ist in dem zweiten Ausführungsbeispiel nicht mehr nötig. Natürlich könnte im Grundkörper 1 dieses zweiten Ausführungsbeispiels auch ein Mikrocontroller und ein Transceiver eingebaut werden. Es können dieselben Module 5 wie in dem ersten Ausführungsbeispiel eingesetzt werden.

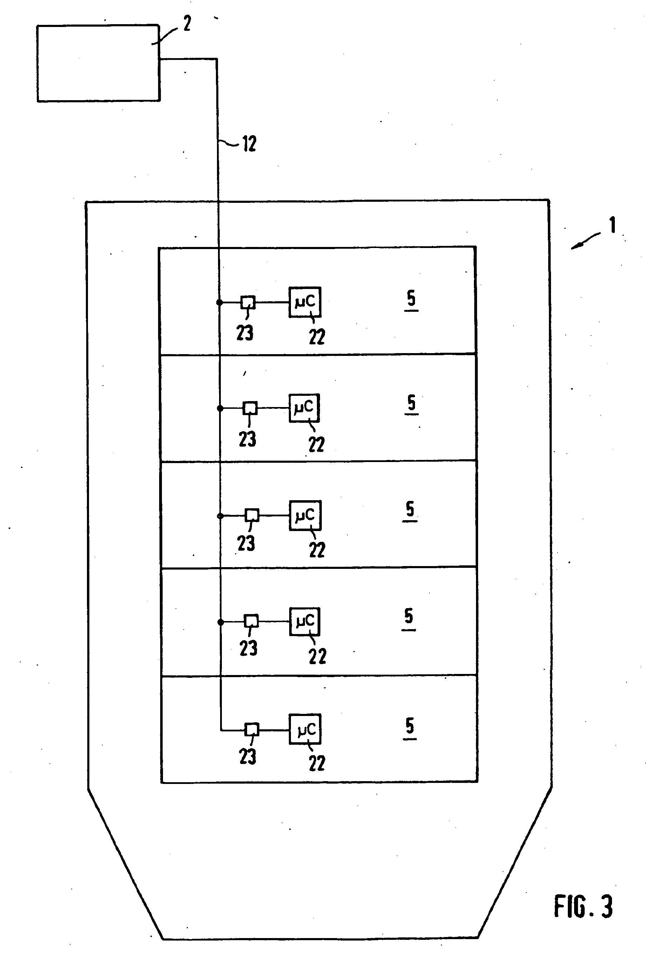

In einer weiteren Variante der erfindungsgemäßen Dachhimmeluntergruppe ist in den Modulen jeweils eine eigene Kommunikationselektronik oder Funkeinrichtung verbaut. Eine solche Anordnung ist in Fig. 3 schematisch dargestellt. Der Übersichtlichkeit halber ist die Verkabelung im Grundkörper 1 sowie die Aufnahmevorrichtung an den Steckplätzen nicht mehr eingezeichnet. Die Module 5 sind schon eingebaut. Jedes der Module 5 enthält einen eigenen Mikrocontroller 22 und einen eigenen Transceiver 23. Die einzelnen Module 5 können in Reihe geschaltet über dieselbe Kommunikationsbusleitung 12 mit der Steuereinheit 2 Daten austauschen. Die Module 5 des dritten Ausführungsbeispiels können auch in den Grundkörper 1 des ersten oder zweiten Ausführungsbeispiels eingesetzt werden. Dabei ist jedoch zu beachten, dass der Mikrocontroller 22 der Module 5 als Slave geschaltet sein muss.

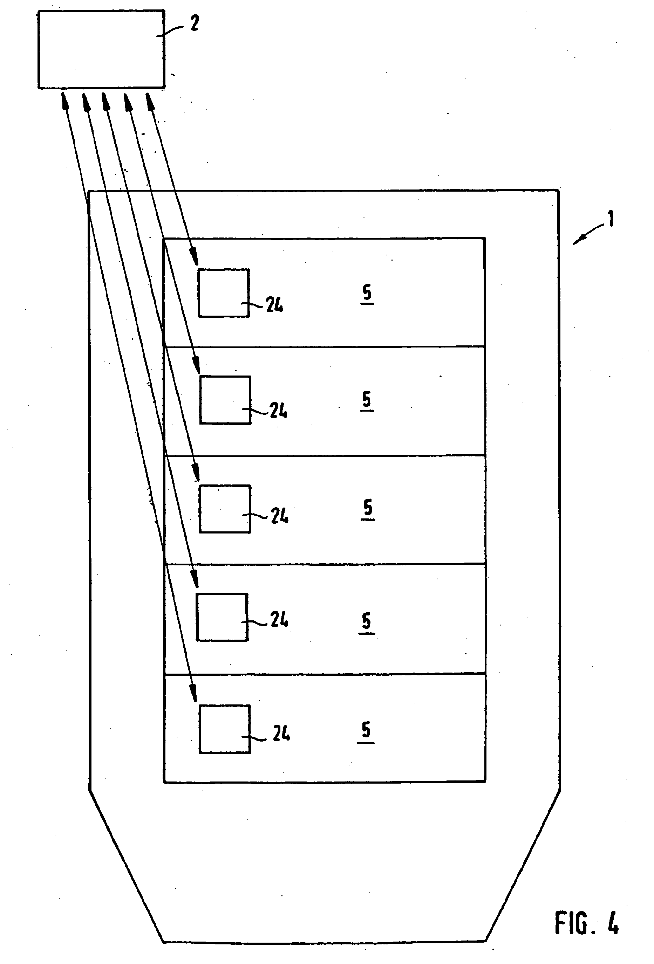

In Fig. 4 ist ein viertes Ausführungsbeispiel der vorliegenden Erfindung dargestellt. Wie in Fig. 3 wurden auch hier die identischen Elemente der Verkabelung und der Aufnahmevorrichtung nicht mehr gezeichnet, und die Module 5 sind bereits in den Grundkörper 1 eingesetzt. Jedes der Module 5 enthält nun eine eigene Funkeinrichtung 24, die direkt den Datenverkehr von und zu der Steuereinrichtung 2 regelt. In dieser Variante sind keine Kommunikationsbusleitungen mehr notwendig. Die Module 5 des vierten Ausführungsbeispiels lassen sich auch in den Steckplätzen 3 der ersten drei Ausführungsbeispiele verwenden, wenn die Steuereinrichtung 2 zum Empfang der Funksignale ausgebildet ist. Auch hier ist als Funkprotokoll wieder der Bluetooth-Standard vorgesehen, dennoch sind auch andere Protokolle denkbar.

## Patentansprüche

1. Dachhimmeluntergruppe für einen Kraftfahrzeugdachhimmel, umfassend einen Grundkörper (1) mit wenigstens einem oder mehreren Steckplätzen (3) für jeweils ein Bedien- oder Funktionsmodul (5), einer der Leistungsversorgung eines Bedien- oder Funktionsmoduls (5) dienende und zu dem oder jedem Steckplatz (3) geführte Verkabelung (9), sowie ein oder mehrere Bedien- oder Funktionsmodule (5),
wobei
ein Bedien- oder Funktionsmodul (5) Anschlussmittel (11) aufweist, die beim Einsetzen automatisch mit einem entsprechenden steckplatzseitigem Anschlussmittel (10) der Verkabelung (9) verbindbar sind, dass alle vorhandenen Steckplätze (3) gleich dimensioniert sind und die gleiche Schnittstelle aufweisen, wobei jedes Bedien- oder Funktionsmodul (5) entweder im Wesentlichen die Größe eines Steckplatzes (3) aufweist oder so dimensioniert ist, dass es in eine Vielzahl von in einer Richtung, insbesondere in Fahrzeuglängsrichtung, mit festem Abstand fluchtend aneinander angrenzenden Steckplätzen (3) einsetzbar und im Wesentlichen eine Vielzahl so groß wie ein Steckplatz (3) ist und dass zu jedem Steckplatz (3) eine Kommunikationsbusleitung (12), über die ein Bedien- oder Funktionsmodul (5) mit einem busseitig gekoppeltem Steuergerät (2) kommuniziert, geführt ist und ein Bedien- oder Funktionsmodul (5) eine Schnittstelle (14) aufweist, die beim Einsetzen automatisch mit einer entsprechenden Schnittstelle (13) der Kommunikationsbusleitung (12) verbindbar ist, und/oder dass wenigstens eine Funkeinrichtung (21, 24) zur drahtlosen Kommunikation eines Bedien- oder Funktionsmoduls (5) mit einem zugeordneten Steuergerät (2) vorgesehen ist.

2. Dachhimmeluntergruppe nach Anspruch 1,
**dadurch gekennzeichnet,**
**dass** an dem oder jedem Steckplatz (3) eine Aufnahmevorrichtung angebracht ist, die ein eingesetztes Bedien- oder Funktionsmodul (5) in dem Steckplatz (3) arretiert und ein zugehöriges Mittel (8) umfasst, durch welches die Arretierung selektiv lösbar ist.

3. Dachhimmeluntergruppe nach Anspruch 1 oder 2,
**dadurch gekennzeichnet,**
**dass** die Kommunikationsbusleitung (12) und die Schnittstellen (13, 14) dem LIN-Standard entsprechen.

4. Dachhimmeluntergruppe nach einem der vorangehenden Ansprüche,
**dadurch gekennzeichnet,**
**dass** der Grundkörper (1) zusätzlich einen Transceiver (16) und einen Mikrocontroller (15) enthält, die durch die Kommunikationsbusleitung (12) mit der oder allen Schnittstellen (13) derart verbunden sind, dass der Mikrocontroller (15) automatisch den gesamten Datenverkehr von und zu dem einen oder den mehreren Bedien- oder Funktionsmodulen (13) regelt.

5. Dachmitteluntergruppe nach einem der vorangehenden Ansprüche,
**dadurch gekennzeichnet,**
**dass** die Funkeinrichtung (21) im Grundkörper (1) enthalten ist und automatisch den gesamten Datenverkehr von und zu einem oder mehreren Bedien- oder Funktionsmodulen (5) zum Steuergerät (2) regelt, wobei die Verbindungsleitungen (27) die Funkeinrichtung (21) und das eine oder die mehreren Bedien- oder Funktionsmodule (5) verbinden.

6. Dachhimmeluntergruppe nach einem der vorangehenden Ansprüche,
**dadurch gekennzeichnet,**
**dass** ein Bedien- oder Funktionsmodul (5) einen Transceiver (23) und einen Mikrocontroller (22) umfasst.

7. Dachhimmeluntergruppe nach einem der vorangehenden Ansprüche,
**dadurch gekennzeichnet,**
**dass** ein Bedien- oder Funktionsmodul (5) jeweils eine der wenigstens einen Funkeinrichtung (24) umfasst.

8. Dachhimmeluntergruppe nach einem der vorangehenden Ansprüche,
**dadurch gekennzeichnet,**
**dass** sie zusätzlich wenigstens ein Abdeckelement für ungenutzte Steckplätze (3) umfasst.

9. Dachhimmeluntergruppe nach einem der vorangehenden Ansprüche,
**dadurch gekennzeichnet,**
**dass** der Grundkörper (1) zusätzlich ein fest eingebautes Innehlichtmodul (4) umfasst.

10. Dachhimmeluntergruppe nach einem der vorangehenden Ansprüche,
**dadurch gekennzeichnet,**
**dass** der Grundkörper (1) zusätzlich ein fest eingebautes Betätigungs- und Anzeigemodul, insbesondere eine Schiebe-/Ausstelldach-Schaltereinheit, umfasst.

11. Dachhimmeluntergruppe nach einem der vorangehenden Ansprüche,
**dadurch gekennzeichnet,**
**dass** das eine oder die mehreren Bedien- und Funktionsmodule (5) eine Mikrofoneinheit für eine Freisprecheinrichtung und/oder eine Leselichteinheit und/oder eine Garagentorkontrolleinheit und/oder eine Schiebe- /Ausstelldach-Schaltereinheit und/oder einen Großdachbedienschalter und/oder eine Sprachbedienungseinheit und/oder eine Innenraumüberwachungseinheit und/oder ein aufklappbares Brillenfach umfassen.

12. Dachhimmeluntergruppe nach einem der vorangehenden Ansprüche,
**dadurch gekennzeichnet,**
**dass** die wenigstens eine Funkeinrichtung (21, 24) als eine Bluetooth-Einrichtung ausgebildet ist.

## Claims

1. Roofliner components for a motor vehicle roofliner, comprising a main body (1) with at least one or a plurality of plug-in slots (3) for an operating or function module (5), cabling (9) for supplying power to an operating or function module (5) and fed to the or each plug-in slot (3), and one or a plurality of operating or function modules (5), wherein an operating or function module (5) has connection means (11) which can be automatically connected to a corresponding connection means (10) of the cabling (9) on the plug-in slot side, wherein all the plug-in slots (3) provided are of the same dimension and have the same interface, each operating or function module (5) either having essentially the size of one plug-in slot (3) or being dimensioned so that it can be inserted in a multiplicity of plug-in slots (3) lying flush with and adjacent to each other at a fixed distance in one direction, in particular in the longitudinal direction of the vehicle, and being essentially being a multiple of the size of one plug-in slot (3), and wherein a communication bus cable (12), via which an operating or function module (5) communicates with a control unit (2) coupled on the bus side, is fed to each plug-in slot (3) and an operating or function module (5) has an interface (14) which, when inserted, can be automatically connected to a corresponding interface (13) of the communication bus cable (12), and/or wherein at least one radio device (21, 24) is provided for the wireless communication of an operating or function module (5) with an assigned control unit (2).

2. The roofliner components according to Claim 1,
**characterised in that** a receiving device, which locks an inserted operating or function module (5) in the plug-in slot (3), and comprises an associated means (8) for selective release of the locking device, is fitted to the or each plug-in slot (1).

3. The roofliner components according to Claim 1 or 2,
**characterised in that** the communication bus cable (12) and the interfaces (13, 14) conform to the LIN standard.

4. The roofliner components according to one of the preceding claims,
**characterised in that** the main body (1) is additionally provided with a transceiver (16) and a microcontroller (15) which are connected by the communication bus cable (12) to the or all the interfaces (13) so that the microcontroller (15) automatically controls all the data traffic from and to the or the plurality of operating or function modules (13).

5. The roofliner components according to one of the preceding claims,
**characterised in that** the radio device (21) is contained in the main body (1) and automatically controls all the data traffic from and to one or the plurality of operating or function modules (5) to the control unit (2), wherein the connecting cables (27) connect the radio device (21) and the one or plurality of operating or function modules (5).

6. The roofliner components according to one of the preceding claims,
**characterised in that** an operating or function module (5) comprises a transceiver (23) and a microcontroller (22).

7. The roofliner components according to one of the preceding claims,
**characterised in that** an operating or function module (5) each comprises one of the at least one radio device (24).

8. The roofliner components according to one of the preceding claims,
**characterised in that** they comprise additionally at least one covering element for unused plug-in slots (3).

9. The roofliner components according to one of the preceding claims,
**characterised in that** the main body (1) additionally comprises a permanently installed interior light module (4).

10. The roofliner components according to one of the preceding claims,
**characterised in that** the main body (1) additionally comprises a permanently installed actuating and indicating module, in particular a roof slide/pullout switch unit.

11. The roofliner components according to one of the preceding claims,
**characterised in that** one or the plurality of operating and function modules (5) comprise a microphone unit for a handsfree-telephone set and/or a reading light unit and/or a garage door control unit and/or a roof slide/pullout switch unit and/or a large roof operating switch and/or a speech operated unit and/or an interior monitoring unit and/or a folding spectacle case.

12. The roofliner components according to one of the preceding claims,
**characterised in that** the at least one radio device (21, 24) is designed as a Bluetooth device.

## Revendications

1. Composant d'habillage de plafond pour un habillage de plafond de véhicule automobile, comprenant un corps de base (1) avec au moins un ou plusieurs emplacements de prise (3) pour respectivement un module de commande ou fonctionnel (5), avec un câblage (9) servant à l'alimentation d'un module de commande ou fonctionnel (5) et amené à l'emplacement de prise (3) ou à chacun d'entre eux ainsi qu'un ou plusieurs modules de commande ou fonctionnels (5),
un module de commande ou fonctionnel (5) présentant des moyens de connexion (11), qui peuvent être reliés automatiquement lors de l'insertion à un moyen de connexion (10) côté emplacement de prise correspondant du câblage (9), où tous les emplacements de prise (3) disponibles sont de même dimension et présentent la même interface, chaque module de commande ou fonctionnel (5) présentant soit essentiellement la taille d'un emplacement de prise (3) soit étant dimensionné de sorte qu'il peut être utilisé dans une pluralité d'emplacements de prise (3) adjacents alignés à distance fixe dans une direction, en particulier dans la direction longitudinale du véhicule et qu'essentiellement une pluralité est aussi grande qu'un emplacement de prise (3) et où un bus de communication (12), par lequel un module de commande ou fonctionnel (5) communique avec un appareil de commande (2) couplé côté bus, est amené à chaque emplacement de prise (3) et un module de commande et fonctionnel (5) présente une interface (14) qui peut être reliée automatiquement lors de l'insertion à une interface (13) correspondante du bus de communication (12) et/ou où au moins un dispositif radio (21, 24) est prévu pour la communication sans fil d'un module de commande ou fonctionnel (5) avec un appareil de commande (2) associé.

2. Composant d'habillage de plafond selon la revendication 1,
**caractérisé en ce**
**qu'**un dispositif récepteur est appliqué au niveau de l'emplacement de prise (3) ou au niveau de chacun d'entre eux, qui arrête un module de commande ou fonctionnel (5) implanté dans l'emplacement de prise (3) et comprend un moyen (8) associé par lequel le dispositif d'arrêt peut être libéré de manière sélective.

3. Composant d'habillage de plafond selon la revendication 1 ou 2,
**caractérisé en ce**
**que** le bus de communication (12) et les interfaces (13, 14) sont conformes à la norme LIN.

4. Composant d'habillage de plafond selon l'une quelconque des revendications précédentes
**caractérisé en ce**
**que** le corps de base (1) contient en outre un récepteur-émetteur (16) et un microcontrôleur (15), qui sont reliés par le bus de communication (12) à la ou aux interfaces (13) de telle manière que le microcontrôleur (15) régule automatiquement l'ensemble du trafic de données en provenance ou à destination d'un ou de la pluralité de modules de commande ou fonctionnels (13).

5. Composant d'habillage de plafond selon l'une quelconque des revendications précédentes,
**caractérisé en ce**
**que** le dispositif radio (21) est contenu dans le corps de base (1) et régule automatiquement l'ensemble du trafic de données en provenance et à destination d'un ou de plusieurs modules de commande ou fonctionnels (5) vers l'appareil de commande (2), les conduites (27) reliant le dispositif radio (21) et l'une ou la pluralité de modules de commande ou fonctionnels (5).

6. Composant d'habillage de plafond selon l'une quelconque des revendications précédentes,
**caractérisé en ce**
**qu'**un module de commande ou fonctionnel (5) comprend un récepteur-émetteur (23) et un microcontrôleur (22).

7. Composant d'habillage de plafond selon l'une quelconque des revendications précédentes,
**caractérisé en ce**
**qu'**un module de commande ou fonctionnel (5) comprend respectivement un de l'au moins un dispositif radio (24).

8. Composant d'habillage de plafond selon l'une quelconque des revendications précédentes,
**caractérisé en ce**
**qu'**il comprend en outre au moins un élément de recouvrement pour les emplacements de prise (3) non utilisés.

9. Composant d'habillage de plafond selon l'une quelconque des revendications précédentes,
**caractérisé en ce**
**que** le corps de base (1) comprend en outre un module d'éclairage intérieur (4) solidement monté.

10. Composant d'habillage de plafond selon l'une quelconque des revendications précédentes,
**caractérisé en ce**
**que** le corps de base (1) comprend en outre un module d'actionnement et d'affichage solidement monté, en particulier une unité de commutation de toit ouvrant/relevable.

11. Composant d'habillage de plafond selon l'une quelconque des revendications précédentes,
**caractérisé en ce**
**que** l'une ou la pluralité de modules de commande et fonctionnels (5) comprennent une unité microphone pour un dispositif mains libres et/ou une unité de liseuse et/ou une unité de commande de porte de garage et/ou une unité de commutation de toit ouvrant/relevable et/ou un commutateur de commande de grand toit et/ou une unité de commande vocale et/ou une unité de surveillance d'habitacle et/ou un étui à lunettes ouvrable.

12. Composant d'habillage de plafond selon l'une quelconque des revendications précédentes,
**caractérisé en ce**
**que** l'au moins un dispositif radio (21, 24) est réalisé sous forme d'un dispositif Bluetooth.
